# FASCICULE DE BREVET EUROPEEN

(11) **EP 3 845 753 B1**
(45) Date de publication et mention de la délivrance du brevet: **21.12.2022**
(21) Numéro de dépôt: 21150167.1
(22) Date de dépôt: 05.01.2021
(51) Int. Cl.: F02K 1/64, F02K 1/72, F02K 1/74, F02K 1/76

(54) **TURBORÉACTEUR DOUBLE FLUX COMPORTANT UN SYSTÈME D'OBTURATION DE LA VEINE DU FLUX SECONDAIRE COMPORTANT DES VOILES**
TURBOFAN-TRIEBWERK MIT EINEM ABDICHTUNGSSYSTEM FÜR DIE NEBENSTRÖMUNG, DAS SCHALEN UMFASST
TURBOFAN ENGINE HAVING A SYSTEM FOR SEALING THE BYPASS FLOW PASSAGE COMPRISING FABRIC PANELS

(30) Priorité: 06.01.2020 FR 2000067
(43) Date de publication de la demande: 07.07.2021
(73) Titulaire: Airbus Operations (S.A.S.), 31060 Toulouse Cedex 9 (FR)
(72) Inventeur: THUBERT, Benjamin, 31060 TOULOUSE (FR); LE FANIC, Julien, 31060 TOULOUSE (FR); CZAPLA, Lionel, 31060 TOULOUSE (FR)
(74) Mandataire: Cabinet Le Guen Maillet

(56) Documents cités:
- EP-A1- 3 540 203
- FR-A1- 3 076 864
- US-A- 2 933 890
- US-A- 3 366 349

## Description

### DOMAINE TECHNIQUE

La présente invention concerne un turboréacteur double flux qui comporte des voiles souples et un ensemble de bras mobiles en rotation pour obturer la veine du flux secondaire, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

La nacelle comporte une pluralité de portes d'inversion, chacune étant mobile en rotation sur la structure de la nacelle entre une position escamotée dans laquelle elle est en dehors de la veine secondaire et une position déployée dans laquelle elle se positionne en travers de la veine secondaire afin de dévier le flux secondaire vers une fenêtre qui est dans la paroi de la nacelle et qui est ouverte entre la veine secondaire et l'extérieur de la nacelle.

Ainsi, le flux secondaire est dévié vers l'extérieur et plus précisément vers l'avant du turboréacteur afin de produire une contre-poussée.

Les documents EP-A-3 540 203 et FR-A-3 076 864 divulguent des turboréacteurs de l'état de la technique.

Bien que les portes d'inversion donnent entière satisfaction, il est souhaitable de trouver des mécanismes différents, en particulier des mécanismes moins lourds.

### EXPOSE DE L'INVENTION

Un objet de la présente invention est de proposer un turboréacteur double flux qui comporte un voile souple et un ensemble de bras mobiles en rotation pour obturer la veine du flux secondaire.

A cet effet, est proposé un turboréacteur double flux selon la revendication 1, le turboréacteur double flux présentant une direction longitudinale et comportant un moteur et une nacelle entourant le moteur qui comporte un carter de soufflante, où une veine d'un flux secondaire est délimitée entre la nacelle et le moteur et dans laquelle un flux d'air circule selon un sens d'écoulement, ladite nacelle comportant :
- une structure fixe fixée au carter de soufflante et comportant un support de cascades portant des cascades,
- un capot mobile qui est mobile en translation sur la structure fixe selon une direction de translation entre une position avancée dans laquelle le capot mobile est positionné de manière à ce qu'il soit rapproché du carter de soufflante et une position reculée dans laquelle le capot mobile est positionné de manière à ce qu'il soit éloigné du carter de soufflante pour définir entre eux une fenêtre ouverte entre la veine et l'extérieur de la nacelle et en regard des cascades,
- une pluralité de bras, chacun comportant une extrémité distale et une extrémité proximale montée mobile en rotation sur le support de cascades autour d'un axe de rotation globalement parallèle à la direction longitudinale, où chaque bras est mobile entre une position escamotée dans laquelle le bras est en dehors de la veine et une position déployée dans laquelle le bras est en travers de la veine,
- pour chaque paire de bras voisins, un voile souple s'étendant angulairement entre les deux bras et prenant la forme d'une portion de couronne avec un bord extérieur avec un grand rayon et un bord intérieur avec un petit rayon, où le bord extérieur est fixé au support de cascades en arrière par rapport aux cascades et où l'extrémité distale de chaque bras de la paire est fixée le long du bord intérieur du voile souple,
- pour chaque paire de bras, une tringle dont une extrémité est montée articulée à l'extrémité distale de l'un des bras de la paire et dont l'autre extrémité est montée articulée à l'extrémité distale de l'autre bras de la même paire,
- un ensemble d'actionneurs assurant le déplacement du capot mobile entre la position avancée et la position reculée, et inversement, et
- un système de manœuvre destiné à déplacer chaque bras de la position escamotée à la position déployée lorsque le capot mobile passe de la position avancée à la position reculée, et à déplacer chaque bras de la position déployée à la position escamotée lorsque le capot mobile passe de la position reculée à la position avancée.

Le remplacement des portes d'inversion et de leurs mécanismes d'entraînement par les voiles souples et l'ensemble de bras mobiles en rotation permet une réduction de masse. En outre, la présence de plusieurs voiles permet, en cas de besoin, de ne remplacer qu'un seul voile.

Avantageusement, le voile souple est constitué d'une structure en mailles souples sur laquelle est fixée une peau souple.

Avantageusement, entre son extrémité proximale et son extrémité distale, chaque bras comporte une rainure de guidage qui s'étend entre les deux extrémités et dans laquelle coulisse au moins un coulisseau solidaire du voile souple.

Avantageusement, la nacelle comporte un plateau en forme d'une portion de couronne, solidaire du support de cascades et sur lequel les bras sont montés mobiles en rotation.

Avantageusement, le système de manœuvre comporte :
- une came solidaire d'un bras et présentant une dent,
- une rainure réalisée sur le capot mobile dans laquelle loge la dent et où lors du déplacement du capot mobile, la dent suit la rainure et déplace en rotation le bras solidaire de la dent, et
- pour chaque bras, un système de transmission qui transmet le déplacement du bras au bras suivant.

Avantageusement, le système de transmission comporte, pour deux bras voisins, une bielle montée articulée entre lesdits deux bras, et le point d'articulation de la bielle à chaque bras est désaxé par rapport à l'axe de rotation du bras.

L'invention propose également un aéronef comportant au moins un turboréacteur double flux selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un turboréacteur double flux selon l'invention,
[Fig. 2] est une vue en perspective du turboréacteur double flux selon l'invention en position reculée et déployée,
[Fig. 3] est une représentation schématique d'un turboréacteur double flux selon l'invention vu en coupe par un plan vertical,
[Fig. 4] est une vue en perspective d'un détail de réalisation d'un système de transmission selon l'invention,
[Fig. 5] est une vue en perspective et de derrière du système de transmission selon l'invention, et
[Fig. 6] est un agrandissement du détail VI de la Fig. 2.

### EXPOSE DETAILLE DE MODES DE REALISATION

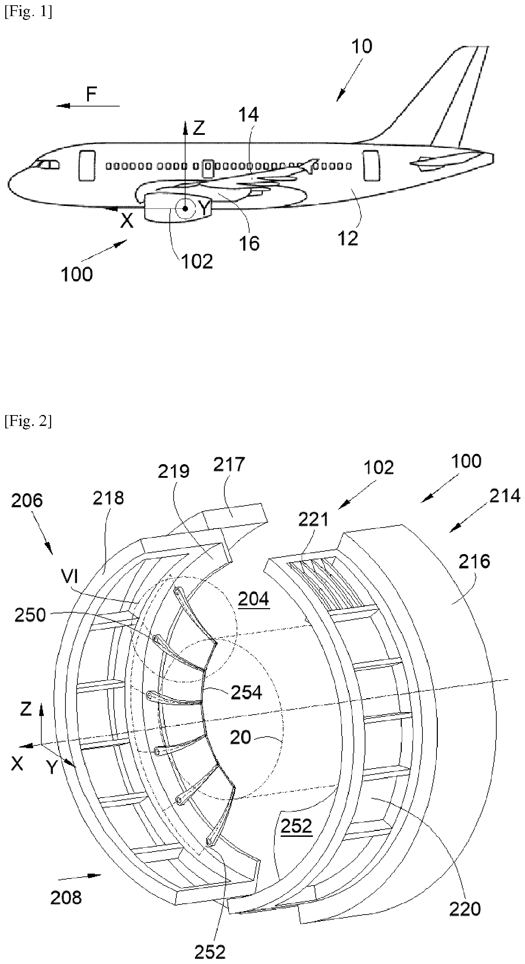

Dans la description qui suit, les termes relatifs à une position sont pris en référence au sens d'avancement d'un aéronef tel que représenté sur la Fig. 1 par la flèche F.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

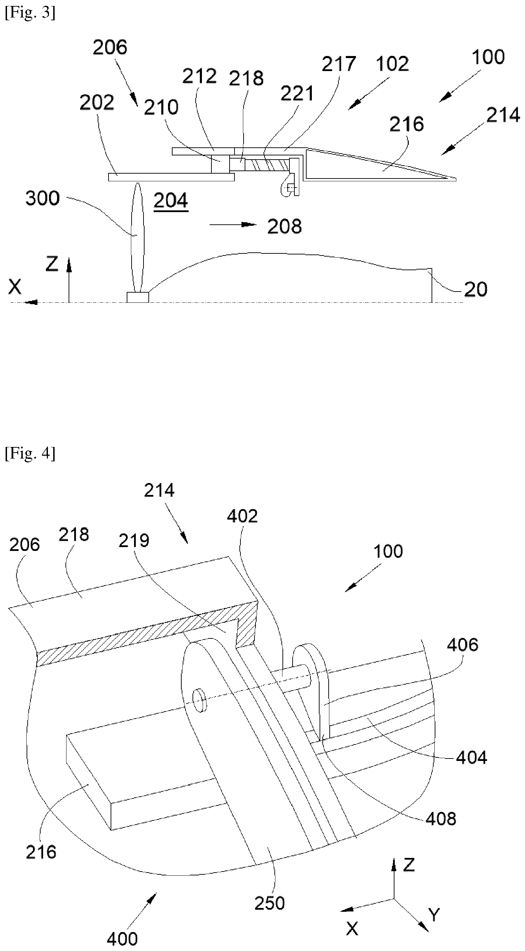

La Fig. 2 et la Fig. 3 montrent le turboréacteur double flux 100 qui présente une nacelle 102 et un moteur 20 qui est logé à l'intérieur de la nacelle 102. Le turboréacteur double flux 100 comporte également un carter de soufflante 202. Sur la Fig. 2, le moteur 20 est matérialisé par un cylindre en traits mixtes.

Dans la description qui suit, et par convention, on appelle X la direction longitudinale du turboréacteur double flux 100 qui est parallèle à l'axe longitudinal de l'aéronef 10 orienté positivement vers l'avant de l'aéronef 10, on appelle Y la direction transversale qui est horizontale lorsque l'aéronef est au sol, et Z la direction verticale, ces trois directions X, Y et Z étant orthogonales entre elles.

La Fig. 2 montre le turboréacteur double flux 100 et la Fig. 3 montre une représentation schématique en coupe du turboréacteur double flux 100.

Le turboréacteur double flux 100 présente entre la nacelle 102 et le moteur 20, une veine 204 dans laquelle circule un flux secondaire 208 provenant de l'entrée d'air à travers une soufflante 300 et qui s'écoule donc selon le sens d'écoulement qui va de l'avant vers l'arrière.

La nacelle 102 présente une structure fixe 206 qui est montée fixe sur le carter de soufflante 202. La structure fixe 206 est composée en particulier ici d'un cadre avant 210 monté autour du carter de soufflante 202 et de panneaux extérieurs 212 fixés au cadre avant 210 et formant une surface aérodynamique extérieure.

La nacelle 102 présente un ensemble mobile 214 qui présente un capot mobile 216 qui forme les parois extérieures de la tuyère.

La structure fixe 206 présente également un support de cascades 218 qui prend la forme d'un cylindre à parois ajourées entre lesquelles sont disposées des cascades 221. Ici le support de cascades 218 est fixé au cadre avant 210.

Dans le mode de réalisation de l'invention présenté sur les Figs. 2 et 3, le capot mobile 216 présente une paroi extérieure 217 qui est cylindrique et qui vient entourer le support de cascades 218.

Le capot mobile 216 est monté mobile en translation selon une direction de translation globalement parallèle à la direction longitudinale X sur la structure fixe 206 de la nacelle 102.

Le capot mobile 216 est mobile entre une position avancée (Fig. 3) et une position reculée (Fig. 2) et inversement. En position avancée, le capot mobile 216 est positionné le plus en avant possible par rapport au sens d'écoulement de manière à ce que le capot mobile 216 soit rapproché des panneaux extérieurs 212 et du carter de soufflante 202 et forme ainsi une surface aérodynamique continue. En position reculée, le capot mobile 216 est positionné le plus en arrière possible par rapport au sens d'écoulement de manière à ce que le capot mobile 216 soit éloigné des panneaux extérieurs 212 et du carter de soufflante 202 de manière à définir entre eux une fenêtre 220 qui est en regard des cascades 221 et s'ouvre entre la veine 204 et l'extérieur.

En position avancée, le capot mobile 216 et les panneaux extérieurs 212 se prolongent de manière à définir la surface extérieure de la nacelle 102. En position avancée, le capot mobile 216 se positionne en regard des cascades 221 et empêche le passage du flux d'air.

En position reculée, le capot mobile 216 et les panneaux extérieurs 212 sont à distance et définissent entre eux la fenêtre 220 ouverte entre la veine 204 et l'extérieur de la nacelle 102. C'est-à-dire que l'air du flux secondaire 208 traverse la fenêtre 220 pour rejoindre l'extérieur du turboréacteur double flux 100 en traversant les cascades 221.

Sur la Fig. 2, le capot mobile 216 et le support de cascades 218 sont réalisés en deux parties symétriques par rapport à un plan vertical XZ. Ces deux parties sont montées sur des poutres de la structure fixe 206, en particulier ici, une poutre 12 heures et une poutre 6 heures qui comblent les espaces entre les deux parties constituant le capot mobile 216 et le support de cascades 218. Bien sûr, le nombre de parties constituant le capot mobile 216 et le support de cascades 218 peut être différent.

La translation du capot mobile 216 est réalisée par tous moyens appropriés, comme par exemple, des systèmes de glissières entre les poutres de la structure fixe 206 et le capot mobile 216.

La nacelle 102 comporte également un ensemble d'actionneurs (non représentés) assurant le déplacement en translation du capot mobile 216 entre la position avancée et la position reculée et inversement. Chaque actionneur est commandé par une unité de contrôle, par exemple du type processeur, qui commande les déplacements dans un sens ou dans l'autre selon les besoins de l'aéronef 10.

Chaque actionneur peut prendre par exemple la forme d'un vérin à double effet (deux directions de travail) dont le cylindre est fixé à la structure fixe 206 et une tige fixée au capot mobile 216.

Le carter de soufflante 202 et les panneaux extérieurs 212 délimitent la fenêtre 220 en amont par rapport au sens d'écoulement et le capot mobile 216 délimite la fenêtre 220 en aval par rapport au sens d'écoulement.

La nacelle 102 comporte une pluralité de bras 250 comportant une extrémité proximale et une extrémité distale. Au niveau de son extrémité proximale, chaque bras 250 est monté mobile en rotation sur le support de cascades 218 sur le pourtour de la veine 204 et autour d'un axe de rotation globalement parallèle à la direction longitudinale X. Chaque bras 250 est ainsi mobile entre une position escamotée dans laquelle le bras 250 est en dehors de la veine 204 et est plaqué contre les bords extérieurs de la veine 204 et une position déployée (Fig. 2) dans laquelle le bras 250 est en travers de la veine 204.

Globalement, chaque bras 250 s'étend dans un plan perpendiculaire à la direction longitudinale X.

Le nombre de bras 250 dépend des dimensions du turboréacteur double flux 100 et plus particulièrement des dimensions de chaque partie constituant le support de cascades 218.

Le passage de la position escamotée à la position déployée s'effectue par combinaison du déplacement du capot mobile 216 et de la rotation des extrémités distales des bras 250 vers l'intérieur du turboréacteur 100.

La nacelle 102 porte également un système de manœuvre (400, Figs. 3 et 4) qui déplace chaque bras 250 de la position escamotée à la position déployée lorsque le capot mobile 216 passe de la position avancée à la position reculée, et à déplacer chaque bras 250 de la position déployée à la position escamotée lorsque le capot mobile 216 passe de la position reculée à la position avancée.

La nacelle 102 comporte également, pour chaque partie constituant le support de cascades 218, et pour chaque paire de bras 250 voisins, un voile souple 252 vu en transparence (traits mixtes) à gauche sur la Fig. 2. Chaque voile 252 prend globalement la forme d'une portion de couronne autour de la direction longitudinale X, avec un bord extérieur avec un grand rayon et un bord intérieur avec un petit rayon. Angulairement, chaque voile souple 252 s'étend entre les deux bras de la paire. Le bord extérieur est fixé au support de cascades 218 en arrière par rapport aux cascades 221 et l'extrémité distale de chaque bras 250 de la paire est fixée le long du bord intérieur du voile souple 252.

En outre, pour garantir l'écartement des deux extrémités distales en position déployée, pour chaque voile souple 252, c'est-à-dire chaque paire de bras 250, la nacelle 102 comporte une tringle 254 dont une extrémité est montée articulée à l'extrémité distale de l'un des bras 250 de la paire correspondant au voile souple 252 et dont l'autre extrémité est montée articulée à l'extrémité distale de l'autre bras 250 de la même paire.

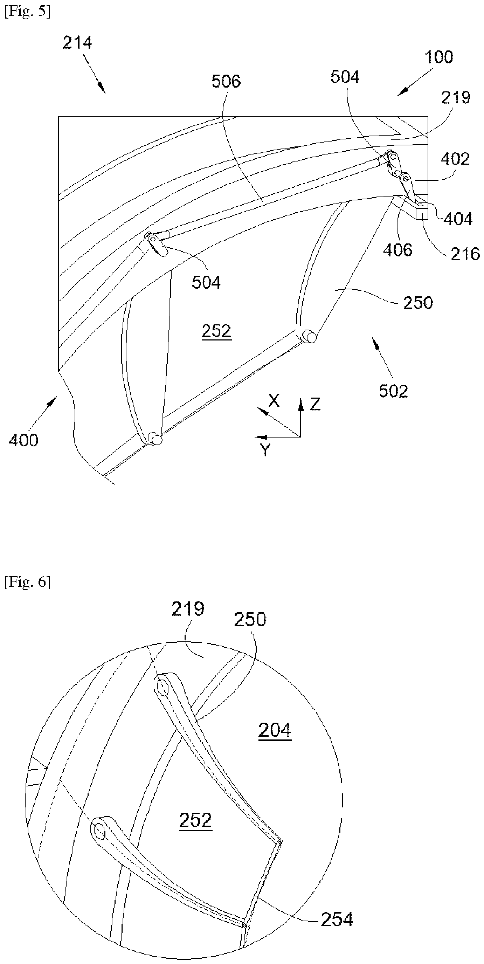

La Fig. 6 montre un agrandissement montrant la tringle 254. L'articulation de chaque extrémité de la tringle 254 à l'extrémité distale correspondante prend préférentiellement la forme d'une liaison rotule.

Le voile souple 252 est positionné devant les bras 250 et la tringle 254 par rapport à l'avant de l'aéronef 10.

Lorsque les bras 250 sont en position déployée, le voile souple 252 est également déployé et étalé entre le support de cascades 218 et les extrémités distales des bras 250 formant une barrière dans la veine 204 qui s'oppose à l'écoulement du flux secondaire 208 qui est alors dévié par le voile souple 252 à travers la fenêtre 220 et les cascades 221. En position déployée, le bord intérieur vient autour du moteur 20 et préférentiellement chaque tringle 254 présente une forme qui épouse la forme extérieure du moteur 20.

La position du voile souple 252 en avant par rapport aux bras 250 et à la tringle 254 permet au voile souple 252 de s'appuyer sur les bras 250 et la tringle 254 et résister ainsi au flux secondaire 208.

Le fonctionnement consiste ainsi, à partir de la position avancée/escamotée, à commander l'activation des actionneurs pour déplacer le capot mobile 216 de la position avancée à la position reculée ce qui entraîne le décalage du capot mobile 216 par rapport au support de cascades 218. Au cours de ce déplacement, le système de manœuvre 400 déplace les bras 250 de la position escamotée à la position déployée ce qui tend à déployer le voile souple 252 en travers de la veine 204.

A l'inverse, le fonctionnement consiste ainsi, à partir de la position reculée/déployée, à commander l'activation des actionneurs pour déplacer le capot mobile 216 de la position reculée à la position avancée ce qui entraîne la superposition du capot mobile 216 et du support de cascades 218. Au cours de ce déplacement, le système de manœuvre 400 déplace les bras 250 de la position déployée à la position escamotée ce qui tend à ramener le voile souple 252 sur l'extérieur de la veine 204.

L'utilisation des bras 250 montés rotatifs sur le support de cascades 218 et du voile souple 252 permet un allégement de l'ensemble par rapport à l'utilisation de portes d'inversion de l'état de la technique. En outre, le voile souple 252 permet d'ajuster l'efficacité et l'aéramatch qui caractérisent un inverseur de poussée et qui désigne le rapport entre la section de sortie de la tuyère en jet direct et la section de sortie de la tuyère en inversion de poussée.

Le voile souple 252 doit présenter des caractéristiques structurelles suffisantes pour résister aux efforts engendrés par le flux secondaire 208 et être suffisamment souple pour pouvoir s'escamoter sur les bords de la veine 204 en position escamotée. Selon un mode de réalisation particulier, le voile souple 252 est constitué d'une structure en mailles souples sur laquelle est fixée une peau souple telle qu'un tissu par exemple.

Entre son extrémité proximale et son extrémité distale, chaque bras 250 peut comporter une rainure de guidage qui s'étend entre les deux extrémités et dans laquelle coulisse au moins un coulisseau solidaire du voile souple 252 afin de garantir le maintien radial du voile souple 252.

Les Figs. 4 et 5 montrent un mode de réalisation particulier du système de manœuvre 400. Sur la Fig. 4, le support de cascades 218 est partiellement découpé pour laisser voir l'intérieur.

Dans le mode de réalisation de l'invention présenté ici, la nacelle 102 comporte un plateau 219 qui est solidaire du support de cascades 218, qui prend la forme d'une portion de couronne et sur lequel les bras 250 sont montés mobiles en rotation. Le plateau 219 s'étend à l'intérieur du support de cascades 218.

Selon un mode de réalisation particulier, pour chaque bras 250, un arbre 402 solidaire du bras 250 est monté mobile en rotation au niveau de l'extrémité proximale sur le plateau 219 et forme l'axe de rotation du bras 250.

En position escamotée, chaque bras 250 est escamoté au-dessus du plateau 219.

Le capot mobile 216 comporte une rainure 404 qui est par exemple disposée au voisinage des poutres 6 heures ou 12 heures.

Le bras 250 le plus proche de la rainure 404 est équipé d'une came 406 qui présente une dent 408 qui loge dans la rainure 404. Dans le mode de réalisation de l'invention présenté ici, la came 406 est solidaire de l'arbre 402 et est disposée de l'autre côté du plateau 219. Bien sûr, selon l'encombrement, il est possible de prévoir une came 406 sur plusieurs des bras 250 et une rainure 404 par came 406.

Lors du déplacement de l'ensemble mobile 214 vers la position reculée, la dent 408 suit la rainure 404 et une déviation de la rainure 404 entraîne une rotation de la came 406 et donc du bras 250 solidaire de la came 406 autour de son axe de rotation vers sa position déployée et inversement.

La rainure 404 présente une forme qui est adaptée pour permettre la rotation du bras 250 de la position escamotée à la position déployée lorsque le capot mobile 216 passe de la position avancée à la position reculée. Et réciproquement, la rainure 404 présente une forme qui est adaptée pour permettre la rotation du bras 250 de la position déployée à la position escamotée lorsque le capot mobile 216 passe de la position reculée à la position avancée.

Le système de manœuvre 400 comporte ainsi la rainure 404, la came 406 et, pour chaque bras 250, un système de transmission 502 qui transmet le déplacement du bras 250 au bras 250 suivant qui se déplacent alors simultanément.

Le déplacement de tous les bras 250 est alors relativement simple à mettre en œuvre et il ne nécessite pas d'actionneurs autres que ceux nécessaires au déplacement du capot mobile 216.

Le système de transmission 502 comporte, pour deux bras 250 voisins, une bielle 506 montée articulée entre lesdits deux bras 250. Le point d'articulation de la bielle 506 à chaque bras 250 est désaxé par rapport à l'axe de rotation du bras 250. Ainsi, lorsque l'un des bras 250 se déplace, l'autre bras 250 est entraîné en rotation par la bielle 506.

Dans le mode de réalisation de l'invention présenté ici, les bielles 506 sont fixées aux bras 250 par l'intermédiaire de cames 504.

L'invention a été plus particulièrement décrite dans le cas d'une nacelle sous une aile mais elle peut s'appliquer à une nacelle située à l'arrière du fuselage.

## Revendications

1. Turboréacteur double flux (100) présentant une direction longitudinale (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule selon un sens d'écoulement, ladite nacelle (102) comportant :
- une structure fixe (206) fixée au carter de soufflante (202) et comportant un support de cascades (218) portant des cascades (219),
- un capot mobile (216) qui est mobile en translation sur la structure fixe (206) selon une direction de translation entre une position avancée dans laquelle le capot mobile (216) est positionné de manière à ce qu'il soit rapproché du carter de soufflante (202) et une position reculée dans laquelle le capot mobile (216) est positionné de manière à ce qu'il soit éloigné du carter de soufflante (202) pour définir entre eux une fenêtre (220) ouverte entre la veine (204) et l'extérieur de la nacelle (102) et en regard des cascades (221),
- une pluralité de bras (250), chacun comportant une extrémité distale et une extrémité proximale montée mobile en rotation sur le support de cascades (218) autour d'un axe de rotation globalement parallèle à la direction longitudinale (X), où chaque bras (250) est mobile entre une position escamotée dans laquelle le bras (250) est en dehors de la veine (204) et une position déployée dans laquelle le bras (250) est en travers de la veine (204),
- pour chaque paire de bras (250) voisins, un voile souple (252) s'étendant angulairement entre les deux bras (250) et prenant la forme d'une portion de couronne avec un bord extérieur avec un grand rayon et un bord intérieur avec un petit rayon, où le bord extérieur est fixé au support de cascades (218) en arrière par rapport aux cascades (221) et où l'extrémité distale de chaque bras (250) de la paire est fixée le long du bord intérieur du voile souple (252),
- pour chaque paire de bras (250), une tringle (254) dont une extrémité est montée articulée à l'extrémité distale de l'un des bras (250) de la paire et dont l'autre extrémité est montée articulée à l'extrémité distale de l'autre bras (250) de la même paire,
- un ensemble d'actionneurs assurant le déplacement du capot mobile (216) entre la position avancée et la position reculée, et inversement, et
- un système de manœuvre (400) destiné à déplacer chaque bras (250) de la position escamotée à la position déployée lorsque le capot mobile (216) passe de la position avancée à la position reculée, et à déplacer chaque bras (250) de la position déployée à la position escamotée lorsque le capot mobile (216) passe de la position reculée à la position avancée.

2. Turboréacteur double flux (100) selon la revendication 1, **caractérisé en ce que** le voile souple (252) est constitué d'une structure en mailles souples sur laquelle est fixée une peau souple.

3. Turboréacteur double flux (100) selon l'une des revendications 1 ou 2, **caractérisé en ce qu'**entre son extrémité proximale et son extrémité distale, chaque bras (250) comporte une rainure de guidage qui s'étend entre les deux extrémités et dans laquelle coulisse au moins un coulisseau solidaire du voile souple (252).

4. Turboréacteur double flux (100) selon l'une des revendications précédentes, **caractérisé en ce que** la nacelle (102) comporte un plateau (219) en forme d'une portion de couronne, solidaire du support de cascades (218) et sur lequel les bras (250) sont montés mobiles en rotation.

5. Turboréacteur double flux (100) selon l'une des revendications précédentes, **caractérisé en ce que** le système de manœuvre (400) comporte :
- une came (406) solidaire d'un bras (250) et présentant une dent (408),
- une rainure (404) réalisée sur le capot mobile (216) dans laquelle loge la dent (408) et où lors du déplacement du capot mobile (216), la dent (408) suit la rainure (404) et déplace en rotation le bras (250) solidaire de la dent (408), et
- pour chaque bras (250), un système de transmission (502) qui transmet le déplacement du bras (250) au bras (250) suivant.

6. Turboréacteur double flux (100) selon la revendication précédente, **caractérisé en ce que** le système de transmission (502) comporte, pour deux bras (250) voisins, une bielle (506) montée articulée entre lesdits deux bras (250), et **en ce que** le point d'articulation de la bielle (506) à chaque bras (250) est désaxé par rapport à l'axe de rotation du bras (250).

7. Aéronef (10) comportant au moins un turboréacteur double flux (100) selon l'une des revendications précédentes.

## Patentansprüche

1. Turbofan-Triebwerk (100), welches eine Längsrichtung (X) aufweist und ein Kerntriebwerk (20) und eine das Kerntriebwerk (20) umgebende Gondel (102) umfasst, welche ein Gebläsegehäuse (202) umfasst, wobei ein Strömungskanal (204) eines Sekundärstroms (208) zwischen der Gondel (102) und dem Kerntriebwerk (20) begrenzt wird, in welchem ein Luftstrom in einer Strömungsrichtung strömt, wobei die Gondel (102) umfasst:
- eine ortsfeste Struktur (206), die am Gebläsegehäuse (202) befestigt ist und einen Kaskadenträger (218) umfasst, der Kaskaden (219) trägt,
- eine bewegliche Haube (216), welche auf der ortsfesten Struktur (206) in einer Translationsrichtung translatorisch beweglich ist zwischen einer vorgeschobenen Position, in welcher die bewegliche Haube (216) so positioniert ist, dass sie an das Gebläsegehäuse (202) angenähert ist, und einer zurückgezogenen Position, in welcher die bewegliche Haube (216) so positioniert ist, dass sie vom Gebläsegehäuse (202) entfernt ist, um dazwischen ein offenes Fenster (220) zwischen dem Strömungskanal (204) und der Außenseite der Gondel (102) und gegenüber den Kaskaden (221) zu definieren,
- mehrere Arme (250), die jeweils ein distales Ende und ein proximales Ende, das drehbeweglich um eine im Wesentlichen zur Längsachse (X) parallele Drehachse an dem Kaskadenträger (218) angebracht ist, aufweisen, wobei jeder Arm (250) zwischen einer eingezogenen Position, in welcher sich der Arm (250) außerhalb des Strömungskanals (204) befindet, und einer ausgefahrenen Position, in welcher sich der Arm (250) quer zum Strömungskanal (204) erstreckt, beweglich ist,
- für jedes Paar benachbarter Arme (250) einen flexiblen Schirm (252), der sich in Winkelrichtung zwischen den zwei Armen (250) erstreckt und die Form eines Kreisringabschnitts mit einem Außenrand mit einem großen Radius und einem Innenrand mit einem kleinen Radius annimmt, wobei der Außenrand am Kaskadenträger (218) bezüglich der Kaskaden (221) hinten befestigt ist und wobei das distale Ende jedes Armes (250) des Paares entlang des Innenrandes des flexiblen Schirms (252) befestigt ist,
- für jedes Paar von Armen (250) eine Stange (254), deren eines Ende am distalen Ende eines der Arme (250) des Paares angelenkt ist und deren anderes Ende am distalen Ende des anderen Armes (250) desselben Paares angelenkt ist,
- eine Anordnung von Aktuatoren, welche die Verlagerung der beweglichen Haube (216) zwischen der vorgeschobenen Position und der zurückgezogenen Position und umgekehrt sicherstellen, und
- ein Betätigungssystem (400), das dazu bestimmt ist, jeden Arm (250) aus der eingezogenen Position in die ausgefahrene Position zu verlagern, wenn sich die bewegliche Haube (216) aus der vorgeschobenen Position in die zurückgezogene Position bewegt, und jeden Arm (250) aus der ausgefahrenen Position in die eingezogene Position zu verlagern, wenn sich die bewegliche Haube (216) aus der zurückgezogenen Position in die vorgeschobene Position bewegt.

2. Turbofan-Triebwerk (100) nach Anspruch 1, **dadurch gekennzeichnet, dass** der flexible Schirm (252) aus einer Struktur aus flexiblen Maschen besteht, auf welcher eine flexible Haut befestigt ist.

3. Turbofan-Triebwerk (100) nach einem der Ansprüche 1 oder 2, **dadurch gekennzeichnet, dass** jeder Arm (250) zwischen seinem proximalen Ende und seinem distalen Ende eine Führungsnut aufweist, welche sich zwischen den zwei Enden erstreckt und in welcher mindestens ein Gleitstück gleitet, das mit dem flexiblen Schirm (252) fest verbunden ist.

4. Turbofan-Triebwerk (100) nach einem der vorhergehenden Ansprüche, **dadurch gekennzeichnet, dass** die Gondel (102) eine Platte (219) in Form eines Kreisringabschnitts aufweist, die mit dem Kaskadenträger (218) fest verbunden ist und an welcher die Arme (250) drehbeweglich angebracht sind.

5. Turbofan-Triebwerk (100) nach einem der vorhergehenden Ansprüche, **dadurch gekennzeichnet, dass** das Betätigungssystem (400) umfasst:
- eine Kurvenscheibe (406), die mit einem Arm (250) fest verbunden ist und einen Zahn (408) aufweist,
- eine auf der beweglichen Haube (216) ausgebildete Nut (404), in welcher der Zahn (408) aufgenommen ist und wobei bei der Verlagerung der beweglichen Haube (216) der Zahn (408) der Nut (404) folgt und den mit dem Zahn (408) fest verbundenen Arm (250) rotatorisch bewegt, und
- für jeden Arm (250) ein Übertragungssystem (502), welches die Bewegung des Armes (250) auf den folgenden Arm (250) überträgt.

6. Turbofan-Triebwerk (100) nach dem vorhergehenden Anspruch, **dadurch gekennzeichnet, dass** das Übertragungssystem (502) für zwei benachbarte Arme (250) eine Schubstange (506) umfasst, die zwischen den zwei Armen (250) angelenkt ist, und dadurch, dass der Anlenkpunkt der Schubstange (506) an jedem Arm (250) bezüglich der Drehachse des Armes (250) versetzt ist.

7. Luftfahrzeug (10), welches mindestens ein Turbofan-Triebwerk (100) nach einem der vorhergehenden Ansprüche umfasst.

## Claims

1. Turbofan (100) having a longitudinal direction (X) and comprising a motor (20) and a nacelle (102), surrounding the motor (20), which comprises a fan casing (202), in which a duct (204) for a bypass flow (208) is delimited between the nacelle (102) and the motor (20) and in which a flow of air flows in a flow direction, said nacelle (102) comprising:
- a fixed structure (206) fixed to the fan casing (202) and comprising a guide vanes support (218) bearing guide vanes (219),
- a mobile cowl (216) able to move in translation, on the fixed structure (206), in a direction of translation between an advanced position in which the mobile cowl (216) is positioned such that it is moved close to the fan casing (202) and a retracted position in which the mobile cowl (216) is positioned such that it is moved away from the fan casing (202) so as to define, between them, an open window (220) between the duct (204) and the exterior of the nacelle (102), and facing the guide vanes (221),
- a plurality of arms (250), each one comprising a distal end and a proximal end which is mounted so as to be mobile in rotation on the guide vanes support (218) about an axis of rotation parallel overall to the longitudinal direction (X), wherein each arm (250) is mobile between a stowed position in which the arm (250) is outside the duct (204) and a deployed position in which the arm (250) is across the duct (204),
- for each pair of adjacent arms (250), a flexible screen (252) extending angularly between the two arms (250) and adopting the form of a portion of an annulus with an exterior edge having a large radius and an interior edge having a small radius, wherein the exterior edge is attached to the guide vanes support (218) rearward of the guide vanes (221), and wherein the distal end of each arm (250) of the pair is fixed along the interior edge of the flexible screen (252),
- for each pair of arms (250), a link rod (254) of which one end is mounted articulated to the distal end of one of the arms (250) of the pair and the other end is mounted articulated to the distal end of the other arm (250) of the same pair,
- a set of actuators causing the mobile cowl (216) to move between the advanced position and the retracted position, and vice versa, and
- an operating system (400) intended to move each arm (250) from the stowed position to the deployed position when the mobile cowl (216) passes from the advanced position to the retracted position, and to move each arm (250) from the deployed position to the stowed position when the mobile cowl (216) passes from the retracted position to the advanced position.

2. Turbofan (100) according to Claim 1, **characterized in that** the flexible screen (252) is made up of a structure of flexible mesh to which a flexible skin is attached.

3. Turbofan (100) according to one of the Claim 1 or 2, **characterized in that**, between its proximal end and its distal end, each arm (250) comprises a guide groove which extends between the two ends and in which there slides at least one slider secured to the flexible screen (252).

4. Turbofan (100) according to one of the preceding Claims, **characterized in that** the nacelle (102) comprises a plate (219) in the form of a portion of an annulus, secured to the guide vanes support (218) and on which the arms (250) are mounted with the ability to rotate.

5. Turbofan (100) according to one of the preceding Claims, **characterized in that** the operating system (400) comprises:
- a cam (406) secured to an arm (250) and having a tooth (408),
- a groove (404), made on the mobile cowl (216) and in which the tooth (408) is received, and wherein, when the mobile cowl (216) moves, the tooth (408) follows the groove (404) and rotates the arm (250) secured to the tooth (408), and
- for each arm (250), a transmission system (502) which transmits the movement of the arm (250) to the next arm (250).

6. Turbofan (100) according to the preceding Claim, **characterized in that** the transmission system (502) comprises, for two adjacent arms (250), a connecting rod (506) mounted articulated between said two arms (250), and wherein the point of articulation of the connecting rod (506) to each arm (250) is offset with respect to the axis of rotation of the arm (250).

7. Aircraft (10) comprising at least one turbofan (100) according to one of the preceding Claims.
